# EUROPEAN PATENT APPLICATION

(11) **EP 2 461 030 A2**
(43) Date of publication of application: **06.06.2012**
(21) Application number: 11190445.4
(22) Date of filing: 24.11.2011
(51) Int. Cl.: F03D 11/02, F16H 1/48

(54) **Drivetrain for generator in wind turbine**

(30) Priority: 01.12.2010 US 957770
(71) Applicant: General Electric Company, Schenectady, NY 12345 (US)
(72) Inventor: Minadeo, Adam Daniel, Greenville, SC South Carolina 29615 (US); Madge, James Henry, Greenville, SC South Carolina 29615 (US); Patel, Priyangu Chunilal, Greenville, SC South Carolina 29615 (US)
(74) Representative: Bedford, Grant Richard

(57) **Abstract**

A drivetrain (28) for a generator (22) in a wind turbine (10) is disclosed. In one embodiment, the drivetrain (28) includes an input shaft (30) configured to provide an input rotational speed, and a planetary gearbox (50) in communication with the input shaft (30). The planetary gearbox (50) includes a stationary carrier (52) and a plurality of rotatable gears (54, 56, 58). The planetary gearbox (50) is configured to convert the input rotational speed to an output rotational speed. The drivetrain (28) additionally includes an output shaft (70) in communication with the planetary gearbox (50). The output shaft (70) is configured to rotate at the output rotational speed. The drivetrain (28) further includes a load isolation device (100) disposed between the input shaft (30) and the planetary gearbox (50). The load isolation device (100) is configured to reduce transmission to the planetary gearbox (50) of bending loads (38) on the input shaft (30).

## Description

The present disclosure relates in general to wind turbines, and more particularly to drivetrains for generators in wind turbines.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known foil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

During operation of the wind turbine, many various loads may be experienced by various components of the wind turbine. In particular, the drivetrain, which may include the shaft, gearbox, generator, and various components thereof, may experience various loads. These loads may be experienced due to wind loading of the rotor blades. The loads experienced by the rotor blades may be transmitted from the rotor blades to these various components.

For example, during operation, axial loads may be experienced by the shaft due to, for example, the thrust of the rotor blades. These axial loads can be transmitted from the shaft to the bearings surrounding and supporting the shaft, and to the gearbox connected to the shaft. Exposure to these axial loads can stress the bearings and gearbox and potentially cause premature failure of these components.

Further, during operation, bending loads may be experienced by the shaft due to, for example, wind gusts that affect the rotor blades. These bending loads can be transmitted from the shaft to the gearbox connected to the shaft. Exposure to these bending loads can stress the gearbox and potentially cause premature failure of various components of the gearbox.

Thus, an improved drivetrain for a wind turbine would be desired in the art. For example, a drivetrain that can offset or isolate various loads experienced by the drivetrain during operation of the wind turbine would be advantageous.

Various aspects and advantages of the invention will be set forth in part in the following description, or may be clear from the description, or may be learned through practice of the invention.

In one embodiment, a drivetrain for a generator in a wind turbine is disclosed. The drivetrain includes an input shaft configured to provide an input rotational speed, and a planetary gearbox in communication with the input shaft. The planetary gearbox includes a stationary carrier and a plurality of rotatable gears. The planetary gearbox is configured to convert the input rotational speed to an output rotational speed. The drivetrain additionally includes an output shaft in communication with the planetary gearbox. The output shaft is configured to rotate at the output rotational speed. The drivetrain further includes a load isolation device disposed between the input shaft and the planetary gearbox. The load isolation device is configured to reduce transmission to the planetary gearbox of bending loads on the input shaft.

In another embodiment, a drivetrain for a generator in a wind turbine is disclosed. The drivetrain includes an input shaft configured to provide an input rotational speed, and a planetary gearbox in communication with the input shaft. The planetary gearbox includes a stationary carrier, a rotatable ring gear, a plurality of rotatable planetary gears, and a rotatable sun gear. Each of the rotatable ring gear, the plurality of rotatable planetary gears, and the rotatable sun gear includes a plurality of helical gear teeth. The planetary gearbox is configured to convert the input rotational speed to an output rotational speed. The drivetrain further includes an output shaft in communication with the planetary gearbox, the output shaft configured to rotate at the output rotational speed. The plurality of helical gear teeth are configured to offset axial loads on the input shaft.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 is a perspective view of a wind turbine according to one embodiment of the present disclosure;
FIG. 2 is a sectional view of a drivetrain for a generator in a wind turbine according to one embodiment of the present disclosure;
FIG. 3 is a sectional view of a drivetrain for a generator in a wind turbine according to another embodiment of the present disclosure;
FIG. 4 is a perspective view of a planetary gearbox according to one embodiment of the present disclosure; and,
FIG. 5 is a sectional view of an output shaft and hub according to one embodiment of the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

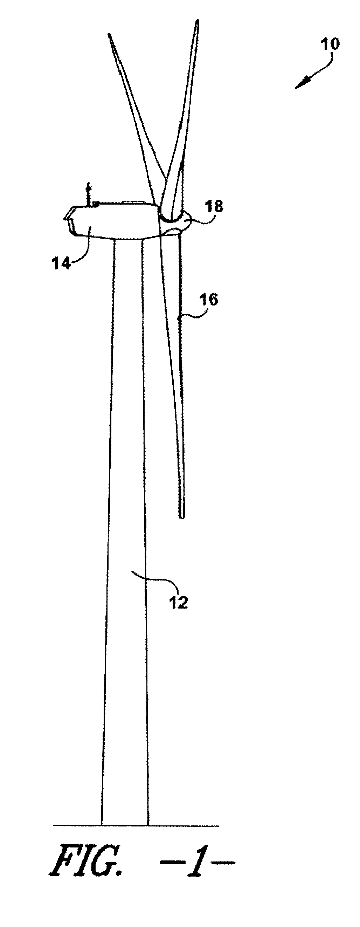

FIG. 1 illustrates a wind turbine 10 of conventional construction. The wind turbine 10 includes a tower 12 with a nacelle 14 mounted thereon. A plurality of rotor blades 16 are mounted to a rotor hub 18, which is in turn connected to a main flange that turns a main rotor shaft, as discussed below. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration.

The hub 18 may be configured to accept the rotor blades 16 thereon. For example, the hub 18 may include a plurality of blade flanges (not shown). The blade flanges may be configured to engage mating flanges (not shown) on the rotor blades 16 to mount the rotor blades 16 to the flanges, and thus to the hub 18.

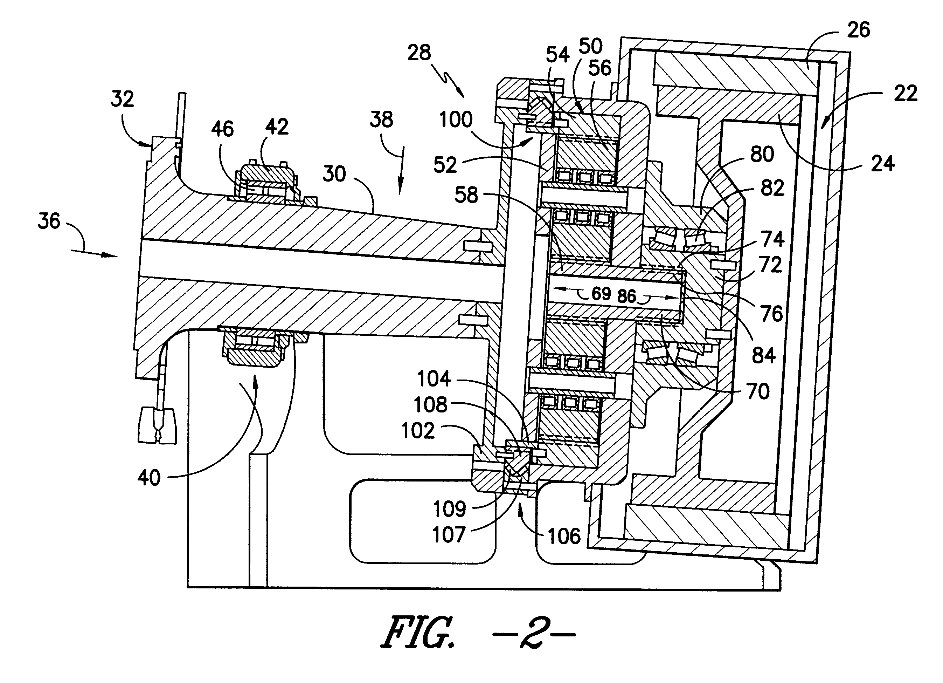

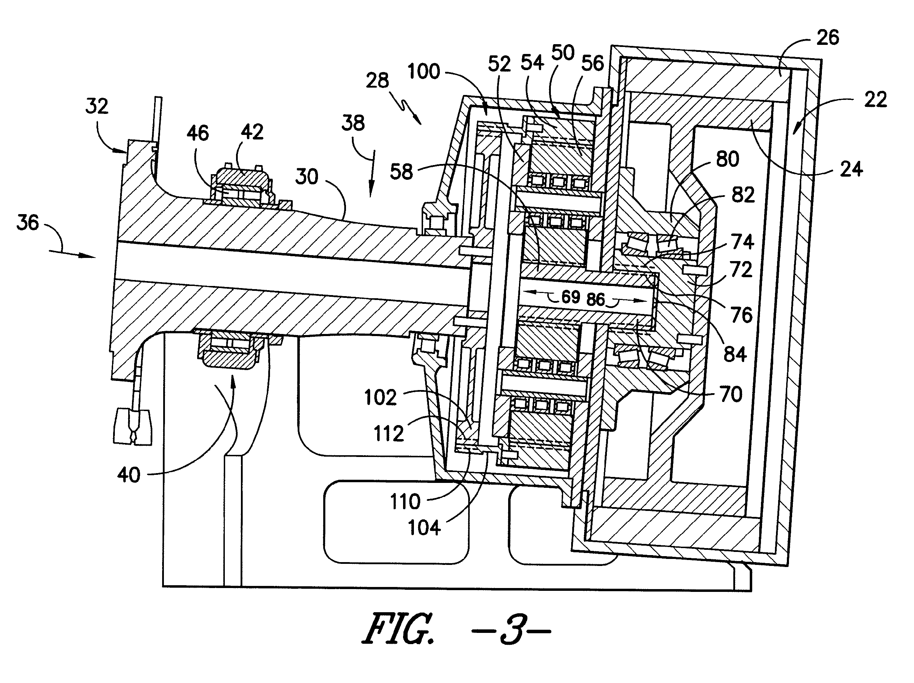

As shown in FIGS. 2 and 3, the wind turbine 10 may further include a generator 22. In exemplary embodiments, the generator 22 may be disposed in the nacelle 14. The generator 22 may be configured to accept mechanical energy from the rotor blades 16 and hub 18 and convert this energy to electrical energy. For example, the generator 22 may include a rotor 24 and a stator 26. As is known in the art, the rotor 24 is a generally movable component of the generator 22, while the stator 26 is a generally stationary component of the generator 22. The generator 22 in exemplary embodiments may be a permanent magnet generator. However, it should be understood that the generator 22 according to the present disclosure is not limited to permanent magnet generators, and rather that any generator suitable for powering a wind turbine 10 is within the scope and spirit of the present disclosure.

In general, the rotor blades 16 may be configured to rotate the rotor 24 of the generator 22. Thus, the generator 22, such as the rotor 24, may be operably connected to the hub 18. Operation of the rotor blades 16 rotates the hub 18, which rotates the rotor 24 and thus operates the generator 22. Thus, a drivetrain 28 for the generator 22 may be provided between the hub 18 and the rotor 24 to provide the operable connection between the hub 18 and the rotor 24.

As shown in FIGS. 2 and 3, the drivetrain 28 according to the present disclosure may include an input shaft 30 configured to provide an input rotational speed. For example, the hub 18 may be mounted to the input shaft 30. As shown, the input shaft 30 may include a flange 32 configured to engage a mating flange (not shown) on the hub 18 to mount the hub 18 to the input shaft 30. Thus, during operation of the wind turbine 10, the rotational speed of the rotor blades 16 may be directly transmitted through the hub 18 to the input shaft 30 as an input rotational speed.

During operation of the wind turbine 10, the input shaft 30 may be subjected to a variety of loads. For example, the input shaft 30 may experience axial loads 36 and/or bending loads 38 during operation. The drivetrain 28 of the present disclosure, as discussed below, may be generally configured to isolate and/or offset these loads in order to reduce stresses on the drivetrain 28 components and reduce the possibility or premature failure of the drivetrain 28 components.

The input shaft 30 may extend through and be supported by at least one support housing 40 or a plurality of support housings 40. For example, a forward housing 42 and, in some embodiments, an aft housing (not shown), may be provided to support the input shaft 30. The housings 40 may include bearings configured to interact with the input shaft. For example, the forward housing 42 may include a locating bearing 46 therein, while the aft housing may include a floating bearing (not shown) therein. The locating bearing 46 may generally accept a portion of the axial load 36 from the input shaft 30. It should be understood that the present disclosure is not limited to locating bearings and floating bearings positioned in housings as described above, and rather that any suitable bearings and housings are within the scope and spirit of the present disclosure.

As shown in FIGS. 2 through 5, the drivetrain 28 according to the present disclosure may further include a planetary gearbox 50. The planetary gearbox 50 may be configured to convert the input rotational speed to an output rotational speed. In exemplary embodiments, the output rotational speed may be faster than the input rotational speed. Alternatively, however, the output rotational speed may be slower than the input rotational speed. The planetary gearbox 50 may be in communication with the input shaft 30 such that the input rotational speed of the input shaft 30 is provided to the planetary gearbox 50.

In exemplary embodiments, the planetary gearbox 50 is a single stage planetary gearbox 50. Thus, the input rotational speed may be converted to the output rotational speed through a single stage of various mating gears, as discussed below. Alternatively, however, the planetary gearbox 50 may be a multiple stage planetary gearbox 50, and the input rotational speed may be converted to the output rotational speed through multiple stages of various mating gears.

The planetary gearbox 50 comprises a stationary carrier 52 and a plurality of rotatable gears. The stationary carrier 52 supports the planetary gearbox 50 and the various rotatable gears therein, and includes various axes for various of the rotatable gears to rotate about. The stationary carrier 52 may further provide various advantages, such as allowing for more efficient lubrication of the planetary gearbox 50. In exemplary embodiments, the planetary gearbox 50 comprises the stationary carrier 52 and a rotatable ring gear 54, at least one or a plurality of rotatable planetary gears 56, and a rotatable sun gear 58. While in some exemplary embodiments the planetary gearbox 50 includes four planetary gears 56, it should be understood that more or less than four planetary gears 56 are within the scope and spirit of the present disclosure.

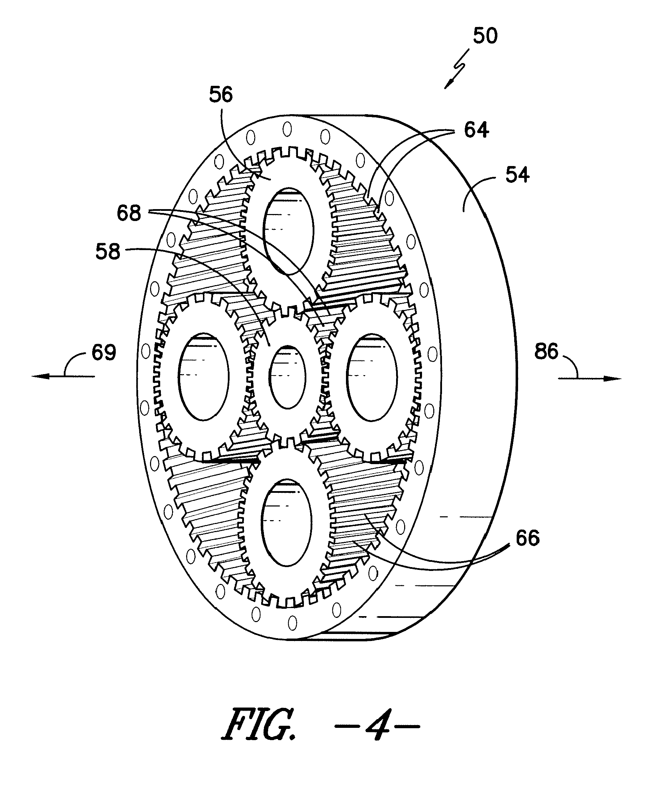

As shown in FIG. 4, each of the rotatable gears in the planetary gearbox 50 includes a plurality of gear teeth. For example, the ring gear 54 includes gear teeth 64, the planetary gears 56 each include gear teeth 66, and the sun gear 58 includes gear teeth 66. The teeth 64, 66, 68 may be configured to mesh together such that the various gears 54, 56, 58 engage each other.

In some exemplary embodiments, as shown in FIG. 4, the gear teeth 64, 66, 68 may be helical gear teeth. Helical gear teeth are generally gear teeth that are disposed at an angle to an axial centerline through a gear. The helical gear teeth 64, 66, 68 may be configured to offset axial loads 36 on the input shaft 30. For example, engagement and rotation of the helical gear teeth may generate an axial load 69 generally opposite to the axial load 36. This axial load 69 may operate to offset the axial load 36 and thus reduce the net axial load experienced by the drivetrain 28. Thus, the stress on various components of the drivetrain 28 that experience or accept portions of the axial load 36, such as the locating bearing 46, may be reduced, and the life of these components prolonged. Additionally or alternatively, the size of the components, such as the locating bearing 46, may be advantageously reduced due to the reduction in net axial load. The size, angle, and number of helical gear teeth 64, 66, 68 may be configured and optimized to generate an optimal axial load 69 for the drivetrain 28.

It should be understood, however, that the gear teeth 64, 66, 68 need not be helical gear teeth. For example, in some embodiments, the gear teeth 64, 66, 68 may be generally axial with respect to an axial centerline through the respective gears 54, 56, 58.

In exemplary embodiments, the ring gear 54 may drive the planetary gearbox 50. Thus, the ring gear 54 and the input shaft 30 may be in communication such that the input rotational speed of the input shaft 30 is provided to the ring gear 54. Alternatively, however, the planetary gears 56 or the sun gear 58 may drive the planetary gearbox 50.

The drivetrain 28 of the present disclosure may further include an output shaft 70. The output shaft 70 may be in communication with the planetary gearbox 50 configured to rotate at the output rotational speed. In exemplary embodiments as shown in FIGS. 2 through 5, for example, the output shaft 70 may be the sun gear 58. Thus, the sun gear 58 may engage the planetary gears 56 and may further extend from the planetary gearbox 50 towards the generator 22. In other embodiments, the output shaft 70 may be coupled to the sun gear 58 or other output gear of the planetary gearbox 50 such that the output shaft 70 may rotate at the output rotational speed.

The output shaft 70 may be in communication with the generator 22 to rotate the rotor 24. For example, in some embodiments, the output shaft 70 may be directly connected to the rotor 24. In other embodiments, as shown in FIGS. 2, 3, and 5, the drivetrain 28 may comprise a hub 72 configured to drive the rotor 24. The output shaft 70 may be connected to the hub 72, and the hub 72 may be connected to the rotor 24. For example, the output shaft 70 and hub 72 may each include mating splines 74 and 76, respectively. The splines 74 and 76 may be configured to connect the output shaft 70 and hub 72. Thus, the splines 74 and 76 may mate with and engage each other, such that the output rotational speed and the torque experienced by the output shaft 70 is provided through the splines 74 and 76 to the hub 72. The hub 72 may be connected to the rotor 24 by, for example, directly fastening the hub 72 and rotor 24 together. Any suitable mechanical fastening devices, such as nuts and bolts, screws, nails, or rivets, or other suitable fastening devices such as welds, may be utilized to fasten the hub 72 and rotor 24 together.

In some embodiments, a hub housing 80 may be provided to support the hub 72, and the hub 72 may extend through the hub housing 80. The hub housing 80 may include a suitable bearing 82 configured to interact with the hub 72.

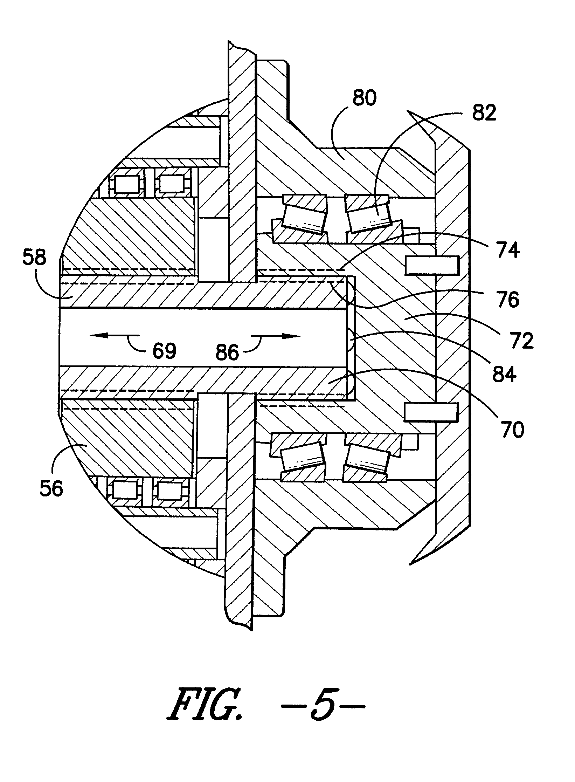

In some embodiments, as shown in FIG. 5, the output shaft 70 may include a stop 84, or a plurality of stops 84, configured to interact with the hub 72. The stops 84 may be disposed on the end of the output shaft 70 distal from the planetary gearbox 50 and adjacent to the hub 72. The stops 84 may generally provide a cushion for the interaction between the output shaft 70 and the hub 72. For example, in embodiments wherein the gear teeth 64, 66, 68 are helical, the planetary gearbox 50 may, along with generating axial load 69, generate another axial load 86. This axial load 86 may be transmitted through the output shaft 70. The stops 84 may thus be provided to cushion the transmission of the axial load 86 from the output shaft 70 to the hub 72. While in exemplary embodiments the stops 84 may be radiused, in alternative embodiments the stops 84 may have any shape suitable for cushioning the interaction between the output shaft 70 and the hub 72.

In exemplary embodiments, the drivetrain 28 of the present disclosure may include a load isolation device 100, as shown in FIGS. 2 and 3. The load isolation device 100 may be disposed between the input shaft 30 and the planetary gearbox 50, and may be configured to reduce the transmission to the planetary gearbox 50 of bending loads 38 on the input shaft 30. For example, bending loads 38 on the input shaft 30 may be provided from the input shaft 30 to the load isolation device 100. The load isolation device 100 may accept these loads, and may prevent or reduce the transmission of the loads to the planetary gearbox 50. Thus, the stress on various components of the drivetrain 28 that experience or accept portions of the bending load 38, such as the planetary gearbox 50, may be reduced, and the life of these components prolonged. Additionally or alternatively, the size of the components, such as the planetary gearbox 50, may be advantageously reduced due to the reduction in net bending load experienced by these components.

In exemplary embodiments, as shown in FIGS. 2 and 3, the load isolation device 100 may comprise a torque web 102 and a torque ring 104. The torque web 102 may be connected to the input shaft 30. The torque web 102 may be connected to the input shaft 30 by, for example, directly fastening the torque web 102 and input shaft 30 together. Any suitable mechanical fastening devices, such as nuts and bolts, screws, nails, or rivets, or other suitable fastening devices such as welds, may be utilized to fasten the torque web 102 and input shaft 30 together. The torque ring 104 may be connected to the planetary gearbox 50. The torque ring 104 may be connected to the planetary gearbox 50 by, for example, directly fastening the torque ring 104 and planetary gearbox 50 together. Any suitable mechanical fastening devices, such as nuts and bolts, screws, nails, or rivets, or other suitable fastening devices such as welds, may be utilized to fasten the torque ring 104 and planetary gearbox 50 together. In exemplary embodiments, the torque ring 104 may be fastened to the ring gear 54. Alternatively, however, the torque ring 104 may be fastened to any suitable gear of the planetary gearbox 50.

The torque web 102 may be configured to drive the torque ring 104. Thus, the input rotational speed of the input shaft 30 may be provided through the torque web 102 and the torque ring 104 to the planetary gearbox 50. Thus, the input rotational speed may be provided to the planetary gearbox 50, such as to the ring gear 54, through the load isolation device 100. Further, the interaction of the torque web 102 and torque ring 104 such that the torque web 102 drives the torque ring 104 allows the transmission of bending loads 38 in the input shaft 30 to the planetary gearbox 50 to be reduced or eliminated.

For example, in one embodiment as shown in FIG. 2, the load isolation device further comprises a slewing ring bearing 106 connecting the torque web 102 and the torque ring 104. The torque web 102 and torque ring 104 may, for example, be fastened to outer and inner rings 107 and 108, respectively, surrounding bearings 109 of the slewing ring bearing 106. Any suitable mechanical fastening devices, such as nuts and bolts, screws, nails, or rivets, or other suitable fastening devices such as welds, may be utilized to fasten the torque web 102 and torque ring 104 to the outer and inner rings 107, 108. The slewing ring bearing 106 may accept bending loads 38 from the input shaft 30 through the torque web 102, and may reduce or prevent transmission of the bending loads 38 to the torque ring 104.

In another embodiment, as shown in FIG. 3, the torque web 102 and the torque ring 104 may each include a mating spline 110 and 112, respectively. The splines 110 and 112 may be configured to connect the torque web 102 and the torque ring 104. Thus, the splines 110 and 112 may mate with and engage each other, such that the input rotational speed and the torque experienced by the torque web 102 is provided through the splines 110 and 112 to the torque ring 104. Further, the splines 110 and 112 may reduce or prevent the transmission of bending loads 38 from the input shaft 30 and the torque web 102 to the torque ring 104.

Thus, the drivetrain 28 of the present disclosure may offset or isolate various loads experienced by the drivetrain 28 during operation of the wind turbine 10. In particular, the drivetrain 28 may offset or isolate axial loads 36 and/or bending loads 38 experienced by the shaft 30 such that various other components of the drivetrain 28, such as locating bearings 46 and/or the planetary gearbox 50, experience less stress and potentially prolonged lifespans.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A drivetrain for a generator in a wind turbine, the drivetrain comprising:
   an input shaft configured to provide an input rotational speed;
   a planetary gearbox in communication with the input shaft, the planetary gearbox comprising a stationary carrier and a plurality of rotatable gears, the planetary gearbox configured to convert the input rotational speed to an output rotational speed;
   an output shaft in communication with the planetary gearbox, the output shaft configured to rotate at the output rotational speed; and,
   a load isolation device disposed between the input shaft and the planetary gearbox, the load isolation device configured to reduce transmission to the planetary gearbox of bending loads on the input shaft.
2. The drivetrain of clause 1, wherein the load isolation device comprises a torque web fastened to the input shaft and a torque ring fastened to the planetary gearbox, the torque web configured to drive the torque ring.
3. The drivetrain of any preceding clause, wherein the load isolation device further comprises a slewing ring bearing connecting the torque web and the torque ring.
4. The drivetrain of any preceding clause, wherein the torque web and the torque ring each include a mating spline configured to connect the torque web and the torque ring.
5. The drivetrain of any preceding clause, wherein the torque ring is fastened to a ring gear of the planetary gearbox.
6. The drivetrain of any preceding clause, wherein the planetary gearbox is a single stage planetary gearbox.
7. The drivetrain of any preceding clause, wherein the planetary gearbox further comprises a rotatable ring gear, a plurality of rotatable planetary gears, and a rotatable sun gear.
8. The drivetrain of any preceding clause, wherein the input rotational speed is provided through the load isolation device to the ring gear.
9. The drivetrain of any preceding clause, wherein the output shaft is the sun gear.
10. The drivetrain of any preceding clause, wherein each of the rotatable ring gear, the plurality of rotatable planetary gears, and the rotatable sun gear comprises a plurality of helical gear teeth.
11. The drivetrain of any preceding clause, further comprising a hub configured to drive a rotor of the generator, the output shaft and the hub each comprising a mating spline configured to connect the output shaft and the hub.
12. A drivetrain for a generator in a wind turbine, the drivetrain comprising:
   an input shaft configured to provide an input rotational speed;
   a planetary gearbox in communication with the input shaft, the planetary gearbox comprising a stationary carrier, a rotatable ring gear, a plurality of rotatable planetary gears, and a rotatable sun gear, each of the rotatable ring gear, the plurality of rotatable planetary gears, and the rotatable sun gear comprising a plurality of helical gear teeth, the planetary gearbox configured to convert the input rotational speed to an output rotational speed; and,
   an output shaft in communication with the planetary gearbox, the output shaft configured to rotate at the output rotational speed;
   wherein the plurality of helical gear teeth are configured to offset axial loads on the input shaft.
13. The drivetrain of any preceding clause, wherein the output shaft is the sun gear.
14. The drivetrain of any preceding clause, further comprising a load isolation device disposed between the input shaft and the planetary gearbox, the load isolation device configured to reduce transmission to the planetary gearbox of bending loads on the input shaft.
15. The drivetrain of any preceding clause, wherein the load isolation device comprises a torque web fastened to the input shaft and a torque ring fastened to the planetary gearbox, the torque web configured to drive the torque ring.
16. The drivetrain of any preceding clause, wherein the load isolation device further comprises a slewing ring bearing connecting the torque web and the torque ring.
17. The drivetrain of any preceding clause, wherein the torque web and the torque ring each include a mating spline configured to connect the torque web and the torque ring.
18. The drivetrain of any preceding clause, wherein the torque ring is fastened to a ring gear of the planetary gearbox.
19. The drivetrain of any preceding clause, wherein the planetary gearbox is a single stage planetary gearbox.
20. The drivetrain of any preceding clause, wherein the input rotational speed is provided through the load isolation device to the ring gear.

## Claims

1. A drivetrain (28) for a generator (22) in a wind turbine (10), the drivetrain (28) comprising:
an input shaft (30) configured to provide an input rotational speed;
a planetary gearbox (50) in communication with the input shaft (30), the planetary gearbox (50) comprising a stationary carrier (52) and a plurality of rotatable gears (54, 56, 58), the planetary gearbox (50) configured to convert the input rotational speed to an output rotational speed;
an output shaft (70) in communication with the planetary gearbox (50), the output shaft (70) configured to rotate at the output rotational speed; and
a load isolation device (100) disposed between the input shaft (30) and the planetary gearbox (50), the load isolation device (100) configured to reduce transmission to the planetary gearbox (50) of bending loads (38) on the input shaft (30).

2. The drivetrain (28) of claim 1, wherein the load isolation device (100) comprises a torque web (102) fastened to the input shaft (30) and a torque ring (104) fastened to the planetary gearbox (50), the torque web (102) configured to drive the torque ring (104).

3. The drivetrain (28) of claim 2, wherein the load isolation device (100) further comprises a slewing ring bearing (106) connecting the torque web (102) and the torque ring (104).

4. The drivetrain (28) of claim 2 or claim 3, wherein the torque web (102) and the torque ring (104) each include a mating spline (110, 112) configured to connect the torque web (102) and the torque ring (104).

5. The drivetrain (28) of any of claims 2 to 4, wherein the torque ring (104) is fastened to a ring gear (54) of the planetary gearbox (50).

6. The drivetrain (28) of any of claims 1 to 5, wherein the planetary gearbox (50) is a single stage planetary gearbox (50).

7. The drivetrain (28) of any of claims 1 to 6, wherein the planetary gearbox (50) further comprises a rotatable ring gear (54), a plurality of rotatable planetary gears (56), and a rotatable sun gear (58).

8. The drivetrain (28) of claim 7, wherein the input rotational speed is provided through the load isolation device (100) to the ring gear (54).

9. A drivetrain (28) for a generator (22) in a wind turbine (10), the drivetrain (28) comprising:
an input shaft (30) configured to provide an input rotational speed;
a planetary gearbox (50) in communication with the input shaft (30), the planetary gearbox (50) comprising a stationary carrier (52), a rotatable ring gear (54), a plurality of rotatable planetary gears (56), and a rotatable sun gear (58), each of the rotatable ring gear (54), the plurality of rotatable planetary gears (56), and the rotatable sun gear (58) comprising a plurality of helical gear teeth (64, 66, 68), the planetary gearbox (50) configured to convert the input rotational speed to an output rotational speed; and
an output shaft (70) in communication with the planetary gearbox (50), the output shaft (70) configured to rotate at the output rotational speed;
wherein the plurality of helical gear teeth (64, 66, 68) are configured to offset axial loads (36) on the input shaft (30).

10. The drivetrain (28) of claim 9, wherein the output shaft (70) is the sun gear (58).

11. The drivetrain (28) of claim 9 or claim 10, further comprising a load isolation device (100) disposed between the input shaft (30) and the planetary gearbox (50), the load isolation device (100) configured to reduce transmission to the planetary gearbox (50) of bending loads (38) on the input shaft (30).

12. The drivetrain (28) of claim 11, wherein the load isolation device (100) comprises a torque web (102) fastened to the input shaft (30) and a torque ring (104) fastened to the planetary gearbox (50), the torque web (102) configured to drive the torque ring (104).

13. The drivetrain (28) of claim 11 or claim 12, wherein the torque ring (104) is fastened to a ring gear (54) of the planetary gearbox (50).

14. The drivetrain (28) of any of claims 9 to 13, wherein the planetary gearbox (50) is a single stage planetary gearbox (50).

15. The drivetrain (28) of any of claims 9 to 14, wherein the input rotational speed is provided through the load isolation device (100) to the ring gear (54).
